# EUROPÄISCHE PATENTANMELDUNG

(11) **EP 1 306 404 A1**
(43) Veröffentlichungstag der Anmeldung: **02.05.2003**
(21) Anmeldenummer: 02022954.8
(22) Anmeldetag: 11.10.2002
(51) Int. Cl.: C08K 5/00, B29C 65/16

(54) **Laserabsorbierende russarme Formmassen**

(30) Priorität: 24.10.2001 DE 10151847
(71) Anmelder: Bayer Aktiengesellschaft, 51368 Leverkusen (DE)
(72) Erfinder: Joachimi, Detlev, Dr., 47800 Krefeld (DE); Braig, Thomas, Dr., 40476 Düsseldorf (DE); Döbler, Martin, 40593 Düsseldorf (DE); Krause, Frank, 51469 Bergisch Gladbach (DE); Thoma, Frederik, 47475 Kamp-Lintfort (DE)

(57) **Zusammenfassung**

Die vorliegende Erfindung betrifft naturfarbene und eingefärbte thermoplastische Formmassen und daraus gefertigte Formteile, die im Wellenlängenbereich von 700 bis 1200 nm zumindest in spektralen Teilbereichen laserabsorbierend sind und durch Laserdurchstrahlschweißen mit Formteilen, die für Laserlicht transparent bzw. transluzent sind, verschweißt werden können.

## Beschreibung

Die vorliegende Erfindung betrifft naturfarbene und eingefärbte thermoplastische Formmassen und daraus gefertigte Formteile, die im Wellenlängenbereich von 700 bis 1200 nm zumindest in spektralen Teilbereichen laserabsorbierend sind und durch Laserdurchstrahlschweißen mit Formteilen, die für Laserlicht transparent bzw. transluzent sind, verschweißt werden können.

Für die Verschweißung von Kunststoffformteilen existieren verschiedene Verfahren (Kunststoffe 87, (1997), 11, 1632-1640). Voraussetzung für eine stabile Schweißnaht ist im Falle der weit verbreiteten Verfahren des Heizelementschweißens und des Vibrationsschweißens (z.B. von Kfz-Saugrohren) ein ausreichendes Erweichen der Verbindungspartner in der Kontaktzone vor dem eigentlichen Fügeschritt.

Beim Zusammenpressen der Schweißpartner ist es für die Festigkeit der zu bildenden Schweißnaht entscheidend, dass der hierfür aufgewendete Druck in einem bestimmten, optimalen Bereich liegt. Er sollte nicht zu groß sein, da sonst zuviel Schmelze aus der Kontaktzone herausgepresst wird, darf aber auch nicht zu klein sein, da es sonst ebenfalls zu Schwachstellen in der Schweißnaht kommt. Dies hat u.a. seine Ursache darin, dass bei vielen technischen Teilen, die miteinander verschweißt werden sollen, eine 100 %ige Passgenauigkeit nicht erreicht werden kann. Durch genügend hohen Anpressdruck kann nun zwar Kontakt der Formteilhälften über die gesamte Schweißnaht erzielt werden, die lokal unterschiedlichen Druckverhältnisse führen jedoch zu unterschiedlich starkem Ausfließen von Schmelze aus der Schweißnaht und damit zu lokal unterschiedlich hohen Festigkeiten. Eine Verringerung des Problems ist zum Beispiel durch Erhöhung der Schmelzeviskosität möglich (EP-A 0 685 528), bedingt durch ein geringeres Ausfließen der Schmelze aus der Fügezone.

Als alternative Methode zum Vibrationsschweißen und Heizelementschweißen findet das Laserdurchstrahlschweißen, insbesondere mit Diodenlaser in letzter Zeit immer stärkere Verbreitung. Grundlage des Laserstrahlschweißens von Kunststoffen ist die Strahlungsabsorption in der Formmasse. Reine Polymere sind für Laserstrahlung weitgehend transparent bzw. transluzent, d.h. sie absorbieren Laserlicht in dem für Laserdurchstrahlschweißen interessanten Wellenlängenbereich von 700 bis 1200 nm kaum. Durch Pigmente, Füll- bzw. Verstärkungsstoffe und Additive kann die Absorption und damit die Umwandlung von Laserlicht in Wärme gesteuert werden.

Grundlegende Prinzipien des Laserdurchstrahlschweißens sind in der Fachliteratur beschrieben (Kunststoffe 87 (1997) 3, 348-350; Kunststoffe 88 (1998) 2, 210-212; Kunststoffe 87 (1997) **11**, 1632-1640; Plastverarbeiter 50 (1999) **4**, 18-19; Plastverarbeiter 46 (1995) **9**, 42-46).

Voraussetzung für die Anwendung des Laserdurchstrahlschweißens ist, dass die vom Laser emittierte Strahlung zunächst einen Fügepartner, der für Laserlicht der eingesetzten Wellenlänge ausreichend transparent ist, durchdringt, und dann vom zweiten Fügepartner in einer dünnen Schicht von einigen 100 µm absorbiert und in Wärme umgewandelt wird, die zum Aufschmelzen beider Fügepartner in der Kontaktzone und letztlich zur Verbindung durch eine Schweißnaht führt.

Im Bereich der Wellenlänge der für das Thermoplastschweißen üblicherweise eingesetzten Laser (Nd:YAG-Laser:1060 nm; Hochleistungsdiodenlaser: 800 - 1000 nm) sind amorphe Polymere wie z.B. Polycarbonate (PC), Polystyrol (PS), Polymethylmethacrylat (PMMA), aber auch teilkristalline Thermoplaste wie Polyamide, z.B. Polyamid 6 (PA6) und Polyamid 66 (PA66), oder Polyester, z.B. Polybutylenterephthalat (PBT) und Polyethylenterephthalat (PET), weitgehend transparent bzw. lasertransluzent.

Wenn im folgenden die Begriffe lasertransparent, lasertransluzent und laserabsorbierend verwendet werden, beziehen sie sich immer auf den oben genannten Wellenlängenbereich. Es kommt jedoch im Falle der Verwendung von Füll- oder Verstärkungsstoffen und bei den teilkristallinen Werkstoffen durch die teilkristalline Morphologie zu mehr oder weniger starker Streuung des Laserlichtes, so dass ein großer Teil der Transmission auf den diffusen Anteil entfällt. Mit steigendem diffusen Anteil nimmt die Transparenz ab, die entsprechenden Prüfkörper oder Formteile wären dann exakter als lasertransluzent zu bezeichnen. Im folgenden werden zur Vereinfachung auch die nur lasertransluzenten Formmassen als lasertransparente Formmassen bezeichnet. Die Messung des Transmissionsvermögens für IR-Laserlicht erfolgt üblicherweise mit einem Spektralphotometer und einer integrierenden Photometerkugel. Diese Messanordnung detektiert auch den diffusen Anteil der transmittierten Strahlung. Es wird nicht nur bei einer Wellenlänge, sondern in einem Spektralbereich gemessen, der alle z.Zt. für das Laserdurchstrahlschweißen eingesetzten Laserwellenlängen umfasst.

Beeinträchtigt wird die Transmission von Laserlicht durch Bestandteile der thermoplastischen Formmassen, die Licht der entsprechenden Wellenlänge absorbieren. Dies sind insbesondere Ruße, aber auch andere Farbstoffe, Pigmente oder Füll- und Verstärkungsstoffe, z.B. Kohlenstofffasern. Für die erfolgreiche technische Anwendung des Laserdurchstrahlschweißens für die Verbindung von Formteilen aus thermoplastischen Formmassen ist also eine laserstrahlabsorbierende Formmasse und eine weitgehend laserstrahltransparente Formmasse erforderlich.

Für die laserabsorbierende Formmasse werden z.B. im Falle von glasfaserverstärkten PA6-Compounds rußhaltige Formmassen eingesetzt. Derartige Formmassen werden z.B. üblicherweise auch für Saugrohre von Kraftfahrzeugverbrennungsmotoren, die im Vibrationsschweißverfahren oder durch Heizelementschweißen gefügt werden, eingesetzt (Kunststoffe 91 (2001) 7, 100-102).

Falls die Absorption der Strahlung sehr oberflächennah erfolgt, was u.U. zu geringerer Schweißnahtfestigkeit führt, kann ggf. durch Reduzierung der Rußkonzentration eine Verbesserung erzielt werden (Kunststoffe 87 (1997) 3, 348-350).

In EP-B 0 751 865 wird ein Verfahren des Laserdurchstrahlschweißens beschrieben, bei dem ein erstes Werkstückteil mit einer Transmission von größer 60 % mit einem zweiten Werkstückteil vernachlässigbarer Transmission verschweißt wird. Die geringe Transmission des Gehäusesockels wird dabei durch eine Pigmentierung mit 1 % bis 2 % Farbstoffe und für den Gehäusedeckel mit einer geringeren Farbmittelkonzentration, gegebenenfalls auch ohne Pigmentierung erzielt. Welche Pigmente bzw. Farbmittel geeignet sind, ist nicht beschrieben.

DE-A 199 60 104 beschreibt wie man zwei oder mehr in dunklen Farben eingefärbte Formteile miteinander durch Laserdurchstrahlschweißen verbinden kann. Z.B. werden dunkle bis schwarze Formteile, die mit Kombinationen von Farbmitteln eingefärbt sind, welche selbst nicht im NIR-Bereich des Laserschweißens absorbieren, mit Formteilen verschweißt, die im NIR-Bereich des Laserschweißens absorbierende Farbmittel enthalten, im einfachsten Falle Ruß.

EP-A 1 029 650 beschreibt die Verwendung von lasertransparenten Polyester-Formmassen, die durch Kombinationen von gelben und violetten Farbmitteln schwarz eingefärbt sind für die Laserdurchstrahlverschweißung mit laserabsorbierenden Polyesterformmassen.

Die Verwendung des Laserdurchstrahlschweißens für die Herstellung von Behältern mit zylindrischen o.ä. Querschnitten ist in DE-A 19 916 786 beschrieben. WO-A 200066346 beschreibt die Anwendung des Laserdurchstrahlschweißens bei der Herstellung u.a. von synthetischen Teppichen, weitere Anwendungen sind verschweißte Tuben (DE-A 44 25 861) oder die Verbindung von Platten bzw. Folien (JP-A 11170371).

Prinzipiell ist also die Kombination von z.B. nicht eingefärbtem glasfaserverstärkten Formmassen als lasertransparentem Partner mit einer mittels Ruß eingefärbten Formmasse auf Basis des gleichen Polymers als laserabsorbierendem Partner eine Möglichkeit, um zu einer festen Verbindung von zwei Formteilen zu gelangen.

Die Verwendung schwarzer, mittels Ruß eingefärbter thermoplastischer Formmassen als laserabsorbierenden Partner beim Laserdurchstrahlschweißen ist jedoch für viele Anwendungen nicht möglich. Dies betrifft zum einen Anwendungen, bei denen eine gewisse Transparenz oder Transluzenz der entsprechenden Formteile erforderlich ist. Für derartige Anwendungen, z.B. Behälter für Servoöl, Bremsflüssigkeit, Kühlmittel etc. werden meist nicht eingefärbte Thermoplaste verwendet, die jedoch beim Laserdurchstrahlschweißen durch ihre Laserttransluzenz nicht als laserabsorbierender Verschweißungspartner eingesetzt werden können. Außerdem ist zum anderen die Verwendung von Ruß als "Laserabsorber" in hellen Einfärbungen meist nicht möglich. Hier ist zwar keine Transparenz oder Transluzenz der Formteile erwünscht, es sollen aber möglichst keine oder nur geringe Farbunterschiede zwischen den Fügepartnern bestehen.

Ein Lösungsansatz für die Verschweißung transparenter heller Formmassen ohne Farbveränderung wird in DE-A 19925203 durch die Verwendung eines Schweißzusatzwerkstoffes gegeben, aus dem erst durch Zuführung z.B. elektrischer oder thermischer Energie ein laserabsorbierenden Stoff wird, der sich anschließend an den Schweißprozess wieder in den ursprünglichen lasertransparenten Stoff umwandeln lässt. Der Schweißzusatzwerkstoff kann dabei als Schicht, Folie oder Draht in der Fügezone oder homogen verteilt im Formteil, das als absorbierender Fügepartner dienen soll, vorliegen. Das Verfahren erfüllt zwar die Aufgabe der verfärbungsfreien Verschweißung transparenter Fügepartner, ist durch den zusätzlichen Verfahrensschritt der Erzeugung des Absorbers vor der Verschweißung aber relativ aufwendig und potenziell störanfälliger. Konkrete Beispiele, die die Anwendbarkeit zur Verschweißung von Thermoplasten wie PA, PBT oder PC belegen könnten fehlen.

Einen weiteren Sonderfall stellen Kombinationen von Fügepartnern dar, die in unterschiedlichen Farben eingefärbt sind. Auch hier wird ein laserstrahltransparenter und ein laserstrahlabsorbierender Partner benötigt. Mit üblichen Farbmitteln eingefärbte Thermoplaste weisen aber meist nur in einem Teil des sichtbaren und des IR-Spektralbereiches Absorptionen auf, so dass sie meist nicht oder nur bedingt für das Laserdurchstrahlschweißen als laserabsorbierender Fügepartner geeignet sind.

Das am häufigsten zur Schwarzeinfärbung von technischen Thermoplasten verwendete Farbmittel ist Ruß, wobei Ruße zum Einsatz kommen, die über verschiedene Verfahren hergestellt werden und unterschiedliche Korngrößenverteilungen bzw. spezifische Oberflächen besitzen. Die Verwendung von Rußen ist für die Schwarzeinfärbung deutlich kostengünstiger als organische oder anorganische Farbmittel.

In vielen Fällen wirkt sich die Einfärbung mit Rußen oder anorganischen Pigmenten jedoch negativ auf mechanische Eigenschaften von technischen Thermoplasten, insbesondere auf die Zähigkeit, gemessen z.B. als Izod-Schlagzähigkeit nach ISO 180 1U, aus. Auch hier besteht also Bedarf nach laserabsorbierenden Additiven, speziell nach solchen, die den völligen oder weitgehenden Verzicht auf Ruß gestatten und dabei dunkle bis schwarze Einfärbungen bei geringerer Beeinträchtigung der mechanischen Eigenschaften ermöglichen.

In manchen technischen Thermoplasten, z.B. in Polyamid 6 und Polyamid 66 wirken Ruße außerdem als Nukleierungsmittel, d.h. der Ruß wirkt als Kristallisationskeim in der Polyamidschmelze und fördert somit die Kristallisation. Beschleunigte Kristallisation führt jedoch häufig zu einer Verschlechterung der Oberflächenqualität, insbesondere bei im Spritzgießverfahren hergestellten Formteilen. Deshalb wird in thermoplastischen Formmassen häufig eine möglichst geringe Konzentration an Ruß eingesetzt.

Wünschenswert ist eine möglichst uneingeschränkte Farbgebung der mittels Laserdurchstrahlschweißen zu verschweißenden Fügepartner bei gleichzeitig möglichst guter Oberflächenqualität.

Aufgabe war es -daher, naturfarbene und eingefärbte laserabsorbierenden Formmassen für die Herstellung von Formteilen mit hoher Oberflächenqualität bereitzustellen, die sich im Laserdurchstrahlverfahren gut mit lasertransparenten Formteilen verbinden lassen, wobei in einer bevorzugten Ausführungsform das laserabsorbierende Material in Schichtdicken bis 5 mm im Bereich des sichtbaren Lichtes transparent oder transluzent ist und in einer weiteren bevorzugten Ausführungsform beide Formteile für das menschliche Auge eine sehr ähnliche optische Erscheinung hinsichtlich Farbe und Oberflächenqualität aufweisen.

Es wurde nun gefunden, dass durch Einsatz von im Infrarotbereich stark absorbierenden Verbindungen bzw. durch Kombination dieser Verbindungen mit mehreren nicht schwarzen Farbmitteln in einer thermoplastischen Formmasse Formteile mit einem naturfarbenen, weißen, schwarzer oder farbigen Farbeindruck und sehr guter Oberflächenqualität hergestellt werden können, deren Lasertransmission maßgeschneidert so eingestellt werden kann, dass sie gut mit einem lasertransparenten Fügepartner verschweißt werden können.

Gegenstand der Erfindung sind daher Zusammensetzungen enthaltend
A) 35 bis 99,999 Gew.-% bevorzugt 45 bis 99,995 Gew.-% eines lasertransparenten Thermoplasten
B) 0,001 bis 0,1, bevorzugt 0,002 bis 0,07, besonders bevorzugt 0,004 bis 0,05 Gew.-% eines oder mehrerer IR-absorbierenden Verbindung aus der Gruppe der Phthalocyanine, der Naphthalocyanine, der Perylene, der Quaterylene, der Metallkomplexe, der Azofarbstoffe, der Anthraquinone, der Quadratsäurederivate, der Immoniumfarbstoffe sowie der Polymethine.
C) 0 bis 70, bevorzugt 5 bis 55, besonders bevorzugt 10 bis 40 Gew.-% eines mineralischen Füll- und/oder Verstärkungsstoffes
D) 0 bis 30 Gew. %, bevorzugt 0,1 bis 20 Gew.-% übliche Additive wie Verarbeitungshilfsmittel, Nukleierungsmittel, Stabilisatoren, Flammschutzmittel, Elastomermodifikatoren.
wobei die Gesamtzusammensetzung bevorzugt einen Rußanteil von weniger als 0,1, mehr bevorzugt weniger als 0,05, besonders bevorzugt weniger als 0,01 Gew.-% aufweist

Als **Komponente A** können erfindungsgemäß alle lasertransparenten Thermoplasten eingesetzt werden. Erfindungsgemäß werden unter lasertransparenten Thermoplasten Kunststoffe verstanden, die ohne Farbmittelzusatz in Schichtdicken von 0,4 bis 6 mm, bevorzugt 0,5 bis 5, besonders bevorzugt 0,6 bis 3,5 mm im Wellenlängenbereich von 700 bis 1200 nm oder in spektralen Teilbereichen davon eine Lasertransmission von größer 5 %, bevorzugt größer 10 %, besonders bevorzugt größer 15 % besitzen. Erfindungsgemäß eignen sich als Komponente A, insbesondere Polyamide, thermoplastische Polyester, Polycarbonate, Polystyrole (einschließlich syndiotaktisches Polystyrol) und/oder Polyolefine und/oder Mischungen davon.

Als Komponente A eignen sich Polymere oder Copolymere, z.B. auf Basis von teilaromatischen Polyestern wie beispielsweise Polyalkylenterephthalaten, aromatischen Polyestern, Polyamid, Polycarbonat, Polyacrylat, Polymethacrylat, ABS-Pfropfpolymerisate, Polyolefine wie Polyethylen oder Polypropylen, Polystyrol, Polyvinylchlorid, Polyoxymethylen, Polyimid, Polyether und Polyetherketone, die einzeln oder als Blend aus verschiedenen Polymeren eingesetzt werden können.

Bevorzugt werden als Komponente A **Polyamide** eingesetzt. Die erfindungsgemäßen Polyamide können nach verschiedenen Verfahren hergestellt und aus sehr unterschiedlichen Bausteinen synthetisiert werden und im speziellen Anwendungsfall allein oder in Kombination mit Verarbeitungshilfsmitteln, Stabilisatoren, polymeren Legierungspartnern (z.B. Elastomeren) oder auch Verstärkungsmaterialien (wie z.B. mineralischen Füllstoffen oder Glasfasern), zu Werkstoffen mit speziell eingestellten Eigenschaftskombinationen ausgerüstet werden. Geeignet sind auch Blends mit Anteilen von anderen Polymeren z.B. von Polyethylen, Polypropylen, ABS, wobei ggf. ein oder mehrere Kompatibilisatoren eingesetzt werden können. Die Eigenschaften der Polyamide lassen sich durch Zusatz von Elastomeren verbessern, z. B. im Hinblick auf die Schlagzähigkeit von z. B. verstärkten Polyamiden. Die Vielzahl der Kombinationsmöglichkeiten ermöglicht eine sehr große Zahl von Produkten mit unterschiedlichsten Eigenschaften.

Zur Herstellung von Polyamiden sind eine Vielzahl von Verfahrensweisen bekannt geworden, wobei je nach gewünschtem Endprodukt unterschiedliche Monomerbausteine, verschiedene Kettenregler zur Einstellung eines angestrebten Molekulargewichtes oder auch Monomere mit reaktiven Gruppen für später beabsichtigte Nachbehandlungen eingesetzt werden.

Die technisch relevanten Verfahren zur Herstellung von Polyamiden laufen meist über die Polykondensation in der Schmelze. In diesem Rahmen wird auch die hydrolytische Polymerisation von Lactamen als Polykondensation verstanden.

Bevorzugte Polyamide sind teilkristalline Polyamide, die ausgehend von Diaminen und Dicarbonsäuren und/oder Lactamen mit wenigstens 5 Ringgliedern oder entsprechenden Aminosäuren hergestellt werden können.

Als Ausgangsprodukte kommen aliphatische und/oder aromatische Dicarbonsäuren wie Adipinsäure, 2,2,4- und 2,4,4-Trimethyladipinsäure, Azelainsäure, Sebazinsäure, Isophthalsäure, Terephthalsäure, aliphatische und/oder aromatische Diamine wie z.B. Tetramethylendiamin, Hexamethylendiamin, 1,9-Nonandiamin, 2,2,4- und 2,4,4-Trimethylhexamethylendiamin, die isomeren Diamino-dicyclohexylmethane, Diaminodicyclohexylpropane, Bis-aminomethyl-cyclohexan, Phenylendiamine, Xylylendiamine, Aminocarbonsäuren wie z.B. Aminocapronsäure, bzw. die entsprechenden Lactame in Betracht. Copolyamide aus mehreren der genannten Monomeren sind eingeschlossen.

Besonders bevorzugt werden Caprolactame, ganz besonders bevorzugt ε-Caprolactam eingesetzt.

Besonders geeignet sind weiterhin die meisten auf PA6, PA66 und anderen aliphatischen oder/und aromatischen Polyamiden bzw. Copolyamiden basierenden Compounds, bei denen auf eine Polyamidgruppe in der Polymerkette 3 bis 11 Methylengruppen kommen.

Die erfindungsgemäß hergestellten Polyamide können auch im Gemisch mit anderen Polyamiden und/oder weiteren Polymeren eingesetzt werden.

Ebenfalls bevorzugt können als Komponente A teilaromatische Polyester eingesetzt werden. Der erfindungsgemäßen teilaromatische Polyester sind ausgewählt aus der Gruppe der Derivate der Polyalkylenterephthalate, bevorzugt ausgewählt aus der Gruppe der Polyethylentherephthalate, der Polytrimethylenterephthalate und der Polybutylenterephthalate, besonders bevorzugt der Polybutylenterephthalat, ganz besonders bevorzugt des Polybutylenterephthalats.

Unter teilaromatischen Polyestern versteht man Materialien, die neben aromatischen Molekülteilen auch aliphatische Molekülteile enthalten.

Polyalkylenterephthalate im Sinne der Erfindung sind Reaktionsprodukte aus aromatischen Dicarbonsäure oder ihren reaktionsfähigen Derivaten (z.B. Dimethylestern oder Anhydriden) und aliphatischen, cycloaliphatischen oder araliphatischen Diolen und Mischungen dieser Reaktionsprodukte.

Bevorzugte Polyalkylenterephthalate lassen sich aus Terephthalsäure (oder ihren reaktionsfähigen Derivaten) und aliphatischen oder cycloaliphatischen Diolen mit 2 bis 10 C-Atomen nach bekannten Methoden herstellen (Kunststoff-Handbuch, Bd. VIII, S. 695 bis S. 840, Karl-Hanser-Verlag, München 1973).

Bevorzugte Polyalkylenterephthalate enthalten mindestens 80, vorzugsweise 90 Mol.-%, bezogen auf die Dicarbonsäure, Terephthalsäurereste und mindestens 80, vorzugsweise mindestens 90 Mol.-%, bezogen auf die Diolkomponente, Ethylenglykol- und/oder Propandiol-1,3- und/oder Butandiol-1,4-reste.

Die bevorzugten Polyalkylenterephthalate können neben Terephthalsäureresten bis zu 20 Mol-% Reste anderer aromatischer Dicarbonsäuren mit 8 bis 14 C-Atomen oder aliphatischer Dicarbonsäuren mit 4 bis 12 C-Atomen enthalten, wie Reste von Phthalsäure, Isophthalsäure, Naphthalin-2,6-dicarbonsäure, 4,4'-Diphenyldicarbonsäure, Bernstein-, Adipin-, Sebacinsäure, Azelainsäure, Cyclohexandiessigsäure, Cyclohexandicarbonsäure.

Die bevorzugten Polyalkylenterephthalate können neben Ethylen- bzw. Propandiol-1,3- bzw. Butandiol-1,4-glykolresten bis zu 20 Mol.-% anderer aliphatischer Diole mit 3 bis 12 C-Atomen oder cycloaliphatischer Diole mit 6 bis 21 C-Atomen enthalten, z.B. Reste von Propandiol-1,3, 2-Ethylpropandiol-1,3, Neopentylglykol, Pentan-diol-1,5, Hexandiol-1.6, Cyclohexan-dimethanol-1,4, 3-Methylpentandiol-2,4, 2-Methylpentandiol-2,4, 2,2,4-Trimethylpentandiol-1,3 und -1,6,2-Ethylhexandiol-1,3 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethylcyclobutan, 2,2-bis-(3-β-hydroxyethoxyphenyl)-propan und 2,2-bis-(4-hydroxypropoxyphenyl)-propan (DE-A 24 07 674, 24 07 776, 27 15 932).

Die Polyalkylenterephthalate können durch Einbau relativ kleiner Mengen 3- oder 4-wertiger Alkohole oder 3- oder 4-basischer Carbonsäure, wie sie z.B. in der DE-A 19 00 270 und der US-A 3 692 744 beschrieben sind, verzweigt werden. Beispiele für bevorzugte Verzweigungsmittel sind Trimesinsäure, Trimellitsäure, Trimethylolethan und -propan und Pentaerythrit.

Besonders bevorzugt sind Polyalkylenterephthalate, die allein aus Terephthalsäure und deren reaktionsfähigen Derivaten (z.B. deren Dialkylestern) und Ethylenglykol und/oder Propandiol-1,3 und/oder Butandiol-1,4 hergestellt worden sind (Polyethylen- und Polybutylenterephthalat), und Mischungen dieser Polyalkylenterephthalate.

Bevorzugte Polyalkylenterephthalate sind auch Copolyester, die aus mindestens zwei der obengenannten Säurekomponenten und/oder aus mindestens zwei der obengenannten Alkoholkomponenten hergestellt sind, besonders bevorzugte Copolyester sind Poly-(ethylenglykol/butandiol-1,4)-terephthalate.

Die Polyalkylenterephthalate besitzen im allgemeinen eine intrinsische Viskosität von ca. 0,4 bis 1,5, vorzugsweise 0,5 bis 1,3, jeweils gemessen in Phenol/o-Dichlorbenzol (1:1 Gew.-Teile) bei 25°C.

Die erfindungsgemäß hergestellten Polyester können auch im Gemisch mit anderen Polyestern und/oder weiteren Polymeren eingesetzt werden.

Als **Komponente A)** können die erfindungsgemäßen Zusammensetzungen bevorzugt auch ein Polycarbonat oder eine Mischung von Polycarbonaten enthalten.

Bevorzugte Polycarbonate sind solche Homopolycarbonate und Copolycarbonate auf Basis der Bisphenole der allgemeinen Formel (I),

HO-Z-OH (I)

worin Z ein divalenter organischen Rest mit 6 bis 30 C-Atomen ist, der eine oder mehrere aromatische Gruppen enthält.

Bevorzugt sind Bisphenole der Formel (Ia) 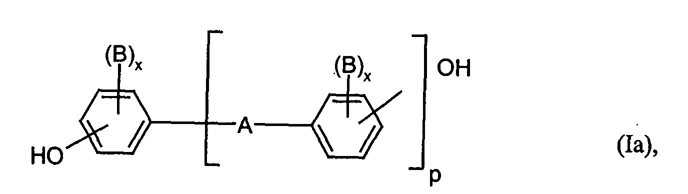 wobei
- A: eine Einfachbindung, C₁-C₅-Alkylen, C₂-C₅-Alkyliden, C₅-C₆-Cycloalkyliden, -O-, -SO-, -CO-, -S-, -SO2-, C₆-C₁₂-Arylen, an das weitere aromatische gegebenenfalls Heteroatome enthaltende Ringe kondensiert sein können,
oder ein Rest der Formel (II) oder (III) 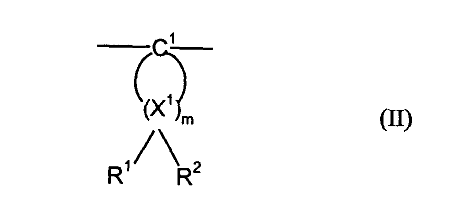 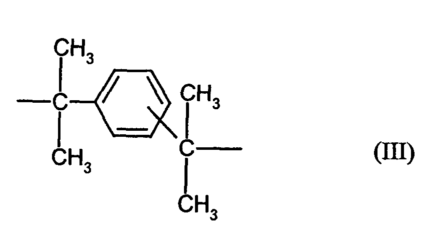
- B: jeweils C₁-C₁₂-Alkyl, vorzugsweise Methyl, Halogen, vorzugsweise Chlor und/oder Brom
- x: jeweils unabhängig voneinander 0, 1 oder 2,
- p: 1 oder 0 sind, und
- R¹ und R²: für jedes X¹ individuell wählbar, unabhängig voneinander Wasserstoff oder C₁-C₆-Alkyl, vorzugsweise Wasserstoff, Methyl oder Ethyl,
- X¹: Kohlenstoff und
- m: eine ganze Zahl von 4 bis 7, bevorzugt 4 oder 5 bedeuten, mit der Maßgabe, dass an mindestens einen Atom X¹, R¹ und R² gleichzeitig Alkyl sind.

Beispiele für Bisphenole gemäß der allgemeinen Formel (I) sind Bisphenole, die zu den folgenden Gruppen gehören: Dihydroxydiphenyle, Bis-(hydroxyphenyl)-alkane, Bis-(hydroxyphenyl)-cycloalkane, Indanbisphenole, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide und α,α'-Bis-(hydroxyphenyl)-diisopropylbenzole.

Auch Derivate der genannten Bisphenole, die zum Beispiel durch Alkylierung oder Halogenierung an den aromatischen Ringen der genannten Bisphenole zugänglich sind, sind Beispiele für Bisphenole gemäß der allgemeinen Formel (I).

Beispiele für Bisphenole gemäß der allgemeinen Formel (I) sind insbesondere die folgenden Verbindungen: Hydrochinon, Resorcin, 4,4'-Dihydroxydiphenyl, Bis-(4 hydroxyphenyl)sulfid, Bis-(4-hydroxyphenyl)sulfon, Bis-(3,5-dimethyl-4-hydroxyphenyl)-methan, Bis-(3,5-dimethyl-4-hydroxyphenyl)-sulfon, 1,1-Bis-(3,5-dimethyl-4-hydroxyphenyl)-p/m-diisopropylbenzol, 1,1-Bis-(4-hydroxyphenyl)-1-phenylethan, 1,1-Bis-(3,5-dimethyl-4-hydroxyphenyl)-cyclohexan, 1,1-Bis-(4-hydroxyphenyl)-3-methylcyclohexan, 1,1-Bis-(4-hydroxyphenyl)-3,3-dimethylcyclohexan, 1,1-Bis-(4-hydroxyphenyl)-4-methylcyclohexan. 1,1-Bis-(4-hydroxyphenyl)-cyclohexan, 1,1-Bis-(4-hydroxyphenyl)-3,3,5-trimethylcyclohexan, 2,2-Bis-(3,5-dichlor-4-hydroxyphenyl)-propan, 2,2-Bis-(3-methyl-4-hydroxyphenyl)-propan, 2,2-Bis-(3,5-dimethyl-4-hydroxyphenyl)-propan, 2,2-Bis-(4-hydroxyphenyl)-propan (d.h. Bisphenol A), 2,2-Bis-(3-chlor-4-hydroxyphenyl)-propan, 2,2-Bis-(3,5-dibrom-4-hydroxyphenyl)-propan, 2,4-Bis-(4-hydroxyphenyl)-2-methylbutan, 2,4-Bis-(3,5-dimethyl-4-hydroxyphenyl)-2-methylbutan, α,α'-Bis-(4-hydroxyphenyl)-o-diisopropylbenzol, α,α'-Bis-(4-hydroxyphenyl)-m-diisopropylbenzol (d. h. Bisphenol M), α,α'-Bis-(4-hydroxyphenyl)-p-diisopropylbenzol und Indanbisphenol.

Besonders bevorzugte Polycarbonate sind das Homopolycarbonat auf Basis von Bisphenol A, das Homopolycarbonat auf Basis von 1,1-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan.

Die beschriebenen Bisphenole gemäß der allgemeinen Formel (I) können nach bekannten Verfahren, z.B. aus den entsprechenden Phenolen und Ketonen, hergestellt werden.

Die genannten Bisphenole und Verfahren zu ihrer Herstellung sind zum Beispiel beschrieben in der Monographie H. Schnell, "Chemistry and Physics of Polycarbonates", Polymer Reviews, Band 9, S. 77-98, Interscience Publishers, New York, London, Sidney, 1964 und in US-A 3 028 635, in US-A 3 062 781, in US-A 2 999 835, in US-A 3 148 172, in US-A 2 991 273, in US-A 3 271 367, in US-A 4 982 014, in US-A 2 999 846, in DE-A 1 570 703, in DE-A 2 063 050, in DE-A 2 036 052, in DE-A 2 211 956, in DE-A 3 832 396, und in FR-A 1 561 518 sowie in den Japanischen Offenlegungsschriften mit den Anmeldenummern 62039/1986, 62040/1986 und 105550/1986.

1,1-Bis-(4-hydroxyphenyl)-3,3,5-trimethylcyclohexan und seine Herstellung ist z.B. beschrieben in US-A 4 982 014.

Indanbisphenole und ihre Herstellung sind zum Beispiel beschrieben in US-A 3 288 864, in JP-A 60 035 150 und in US-A 4 334 106. Indanbisphenole können zum Beispiel aus Isopropenylphenol oder dessen Derivaten oder aus Dimeren des Isopropenylphenols oder dessen Derivaten in Gegenwart eines Friedel-Craft-Katalysators in organischen Lösungsmitteln hergestellt werden.

Polycarbonate können nach bekannten Verfahren hergestellt werden. Geeignete Verfahren zur Herstellung von Polycarbonaten sind zum Beispiel die Herstellung aus Bisphenolen mit Phosgen nach dem Phasengrenzflächenverfahren oder aus Bisphenolen mit Phosgen nach dem Verfahren in homogener Phase, dem sogenannten Pyridinverfahren, oder aus Bisphenolen mit Kohlensäureestern nach dem Schmelzeumesterungsverfahren. Diese Herstellverfahren sind z.B. beschrieben in H. Schnell, "Chemistry and Physis of Polycarbonates", Polymer Reviews, Band 9, S. 31-76, Interscience Publishers, New York, London, Sidney, 1964. Die genannten Herstellverfahren sind auch beschrieben in D. Freitag, U. Grigo, P. R. Müller, H. Nouvertne, "Polycarbonates" in Encyclopedia of Polymer Science and Engineering, Volume 11, Second Edition, 1988, Seiten 648 bis 718 und in U. Grigo, K. Kircher und P.R. Müller "Polycarbonate" in Becker, Braun, Kunststoff-Handbuch, Band 3/1, Polycarbonate, Polyacetale, Polyester, Celluloseester, Carl Hanser Verlag München, Wien 1992, Seiten 117 bis 299 und in D.C. Prevorsek, B.T. Debona und Y. Kesten, Corporate Research Center, Allied Chemical Corporation, Morristown, New Jersey 07960, "Synthesis of Poly(estercarbonate) Copolymers" in Journal of Polymer Science, Polymer Chemistry Edition, Vol. 19, 75-90 (1980).

Das Schmelzeumesterungsverfahren ist insbesondere beschrieben in H. Schnell, "Chemistry and Physics of Polycarbonates", Polymer Reviews, Band 9, S. 44 bis 51, Interscience Publishers, New York, London, Sidney, 1964 sowie in DE-A 1 031 512, in US-A 3 022 272, in US-A 5 340 905 und in US-A 5 399 659.

Bei der Herstellung von Polycarbonat werden bevorzugt Rohstoffe und Hilfsstoffe mit einem geringen Grad an Verunreinigungen eingesetzt. Insbesondere bei der Herstellung nach dem Schmelzeumesterungsverfahren sollen die eingesetzten Bisphenole und die eingesetzten Kohlensäurederivate möglichst frei von Alkaliionen und Erdalkaliionen sein. Derart reine Rohstoffe sind zum Beispiel erhältlich, indem man die Kohlensäurederivate, zum Beispiel Kohlensäureester, und die Bisphenole umkristallisiert, wäscht oder destilliert.

Die erfindungsgemäß geeigneten Polycarbonate haben bevorzugt ein Gewichtsmittel der molaren Masse (Mw), welches sich z.B. durch Ultrazentrifugation oder Streulichtmessung bestimmen lässt, von 10 000 bis 200 000 g/mol. Besonders bevorzugt haben sie ein Gewichtsmittel der molaren Masse von 12 000 bis 80 000 g/mol, insbesondere bevorzugt 20 000 bis 35 000 g/mol.

Die mittlere molare Masse der erfindungsgemäßen Polycarbonate kann zum Beispiel in bekannter Weise durch eine entsprechende Menge an Kettenabbrechern eingestellt werden. Die Kettenabbrecher können einzeln oder als Mischung verschiedener Kettenabbrecher eingesetzt werden.

Geeignete Kettenabbrecher sind sowohl Monophenole als auch Monocarbonsäuren. Geeignete Monophenole sind z.B. Phenol, p-Chlorphenol, p-tert.-Butylphenol, Cumylphenol oder 2,4,6-Tribromphenol, sowie langkettige Alkylphenole, wie z.B. 4-(1,1,3,3-Tetramethylbutyl)-phenol oder Monoalkylphenole bzw. Dialkylphenole mit insgesamt 8 bis 20 C-Atomen in den Alkylsubstituenten wie z.B. 3,5-di-tert.-Butylphenol, p-tert.-Octylphenol, p-Dodecylphenol, 2-(3,5-Dimethyl-heptyl)-phenol oder 4-(3,5-Dimethyl-heptyl)-phenol. Geeignete Monocarbonsäuren sind Benzoesäure, Alkylbenzoesäuren und Halogenbenzoesäuren.

Bevorzugte Kettenabbrecher sind Phenol, p-tert.-Butylphenol, 4-(1,1,3,3-Tetramethylbutyl)-phenol und Cumylphenol.

Die Menge an Kettenabbrechern beträgt bevorzugt zwischen 0,25 und 10 Mol-%, bezogen auf die Summe der jeweils eingesetzten Bisphenole.

Die erfindungsgemäß geeigneten Polycarbonate können in bekannter Weise verzweigt sein, und zwar vorzugsweise durch den Einbau von trifunktionellen oder mehr als trifunktionellen Verzweigern. Geeignete Verzweiger sind z.B. solche mit drei oder mehr als drei phenolischen Gruppen oder solche mit drei oder mehr als drei Carbonsäuregruppen.

Geeignete Verzweiger sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tris-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, 2,6-Bis-(2-hydroxy-5'-methyl-benzyl)-4-methylphenol, 2-(4-Hydroxyphenyl)-2-(2,4-dihydroxyphenyl)-propan, Hexa-(4-(4-hydroxyphenyl-isopropyl)-phenyl)-terephthalsäureester, Tetra-(4-hydroxyphenyl)-methan, Tetra-(4-(4-hydroxyphenyl-isopropyl)-phenoxy)-methan und 1,4-Bis-(4',4"dihydroxytriphenyl)-methylbenzol sowie 2,4-Dihydroxybenzoesäure, Trimesinsäure, Cyanurchlorid, 3,3-Bis-(3-methyl-4-hydroxyphenyl)-2-oxo-2,3-dihydroindol, Trimesinsäuretrichlorid und α,α',α''-Tris-(4-hydroxyphenol)-1,3,5-triisopropylbenzol.

Bevorzugte Verzweiger sind 1,1,1-Tris-(4-hydroxyphenyl)-ethan und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 Mol-% bis 2 Mol-%, bezogen auf Mole an eingesetzten Bisphenolen.

Die Verzweiger können zum Beispiel im Falle der Herstellung des Polycarbonates nach dem Phasengrenzflächenverfahren mit den Bisphenolen und den Kettenabbrechern in der wässrig alkalischen Phase vorgelegt werden, oder in einem organischen Lösungsmittel gelöst zusammen mit den Kohlensäurederivaten zugegeben werden. Im Falle des Umesterungsverfahrens werden die Verzweiger bevorzugt zusammen mit den Dihydroxyaromaten oder Bisphenolen dosiert.

Bevorzugt einzusetzende Katalysatoren bei der Herstellung von Polycarbonat nach dem Schmelzeumesterungsverfahren sind die literaturbekannten Ammoniumsalze und Phosphoniumsalze (siehe beispielsweise US-A 3 442 864, JP-A-14742/72, US-A 5 399 659 und DE-A 19 539 290).

Copolycarbonate können auch verwendet werden. Copolycärbonate im Sinne der Erfindung sind insbesondere Polydiorganosiloxan-Polycarbonat-Blockcopolymere, deren Gewichtsmittel der molaren Masse (Mw) bevorzugt 10 000 bis 200 000 g/mol, besonders bevorzugt 20 000 bis 80 000 g/mol beträgt (ermittelt durch Gelchromatographie nach vorheriger Eichung durch Lichtstreuungsmessung oder Ultrazentrifugation). Der Gehalt an aromatischen Carbonatstruktureinheiten in den Polydiorganosiloxan-Polycarbonat-Blockcopolymeren beträgt vorzugsweise 75 bis 97,5 Gew.-%, besonders bevorzugt 85 bis 97 Gew.-%. Der Gehalt an Polydiorganosiloxanstruktureinheiten in den Polydiorganosiloxan-Polycarbonat-Blockcopolymeren beträgt vorzugsweise 25 bis 2,5 Gew.-%, besonders bevorzugt 15 bis 3 Gew.-%. Die Polydiorganosiloxan-Polycarbonat-Blockcopolymeren können zum Beispiel ausgehend von α,ω-Bishydroxyaryloxyendgruppen-haltigen Polydiorganosiloxanen mit einem mittleren Polymerisationsgrad von bevorzugt Pn = 5 bis 100, besonders bevorzugt Pn = 20 bis 80, hergestellt werden.

Die Polydiorganosiloxan-Polycarbonat-Blockpolymere können auch eine Mischung aus Polydiorganosiloxan-Polycarbonat-Blockcopolymeren mit üblichen polysiloxanfreien, thermoplastischen Polycarbonaten sein, wobei der Gesamtgehalt an Polydiorganosiloxanstruktureinheiten in dieser Mischung bevorzugt 2,5 bis 25 Gew.-% beträgt.

Solche Polydiorganosiloxan-Polycarbonat-Blockcopolymere sind dadurch gekennzeichnet, dass sie in der Polymerkette einerseits aromatische Carbonatstruktur-Einheiten (1) und andererseits Aryloxyendgruppen-haltige Polydiorganosiloxane (2) enthalten, 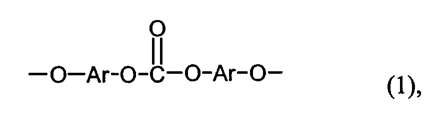 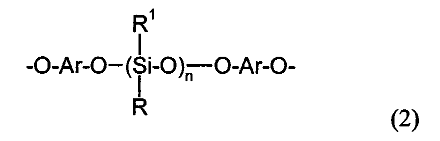 worin
- Ar: gleiche oder verschiedene difunktionelle aromatische Reste sind und
- R und R¹: gleich oder verschieden sind und lineares Alkyl, verzweigtes Alkyl, Alkenyl, halogeniertes lineares Alkyl, halogeniertes verzweigtes Alkyl, Aryl oder halogeniertes Aryl, vorzugsweise Methyl, bedeuten und
- n: den mittleren Polymerisationsgrad von bevorzugt 5 bis 100, besonders bevorzugt 20 bis 80, bedeutet.

Alkyl ist in vorstehender Formel (2) vorzugsweise C₁-C₂₀-Alkyl, Alkenyl ist in vorstehender Formel (2) vorzugsweise C₂-C₆-Alkenyl; Aryl ist in vorstehender Formel (2) vorzugsweise C₆-C₁₄-Aryl. Halogeniert bedeutet in vorstehender Formel teilweise oder vollständig chloriert, bromiert oder fluoriert.

Beispiele für Alkyle, Alkenyle, Aryle, halognierte Alkyle und halogenierte Aryle sind Methyl, Ethyl, Propyl, n-Butyl, tert.-Butyl, Vinyl, Phenyl, Naphthyl, Chlormethyl, Perfluorbutyl, Perfluoroctyl und Chlorphenyl.

Derartige Polydiorganosiloxan-Polycarbonat-Blockcopolymere und ihre Herstellung werden zum Beispiel in US-A 3 189 662, US-A 3 821 325 und US-A 3 832 419 beschrieben.

Bevorzugte Polydiorganosiloxan-Polycarbonat-Blockcopolymere können z.B. hergestellt werden, indem man α,ω-Bishydroxyaryloxyendgruppen-haltige Polydiorganosiloxane zusammen mit anderen Bisphenolen, gegebenenfalls unter Mitverwendung von Verzweigern in den üblichen Mengen, z.B. nach dem Zweiphasengrenzflächenverfahren umsetzt (wie zum Beispiel beschrieben in H. Schnell, "Chemistry and Physis of Polycarbonates", Polymer Reviews, Band 9, S. 31-76, Interscience Publishers, New York, London, Sidney, 1964). Die als Edukte für diese Synthese verwendeten α,ω-Bishydroxyaryloxyendgruppen-haltige Polydiorganosiloxane und ihre Herstellung sind zum Beispiel in US-A 3 419 634 beschrieben.

Den Polycarbonaten könne übliche Additive wie z.B. Entformungsmittel in der Schmelze zugemischt oder auf der Oberfläche aufgebracht werden. Bevorzugt enthalten die verwendeten Polycarbonate bereits Entformungsmittel vor Compoundierung mit den anderen Komponenten der erfindungsgemäßen Formmassen.

Als Komponente A können ausdrücklich auch Mischungen aus mehreren Thermoplasten eingesetzt werden, bevorzugt beispielsweise aus Polyestern und Polycarbonaten, besonders bevorzugt aus PBT und PC sowie PET und PC.

Als **Komponente B)** enthalten die erfindungsgemäßen Zusammensetzungen mindestens eine, bevorzugt von Ruß verschiedene, IR-absorbierende Komponente. Als IR-absorbierende Komponente kommen erfindungsgemäß chemische Verbindungen in Frage, die im Bereich des nahen Infrarot, NIR (Wellenlängenbereich des Lichtes von 700 bis 1200 nm), zumindest in Teilbereichen des NIR, sehr stark absorbieren, während sie im Bereich des VIS nicht oder nur schwach absorbieren und mit den betreffenden Polymeren und gegebenenfalls eingesetzten Additiven und Verstärkungsstoffen verträglich, sowie für Compoundierung, Verarbeitung (z.B. Spritzguss, Extrusion) und Verschweißung ausreichend thermostabil sind. Geeignete IR-absorbierende Verbindungen sind z.B. in M. Matsuoka, Infrared absorbing dyes, Plenum Press, New York, 1990 stoffklassenmäßig beschrieben worden. Besonders geeignet sind solche aus den Stoffklassen der Phthalocyanine, der Naphthalocyanine, der Perylene, der Quaterylene, der Metallkomplexe, der Azofarbstoffe, der Anthraquinone, der Quadratsäurederivate, der Immoniumfarbstoffe sowie der Polymethine. Davon sind ganz besonders Phthalocyanine und Naphthalocyanine geeignet.

Besonders geeignete NIR-Farbstoffe sind aufgrund ihrer thermischen Beständigkeit Phthalocyanine und Naphthalocyanine. Aufgrund der verbesserten Löslichkeit in Thermoplasten sind Phthalocyanine und Naphthalocyanine mit sperrigen Seitengruppen vorzuziehen.

Als Phthalocyanine sind besonders geeignet Verbindungen der allgemeinen Formel (I) mit 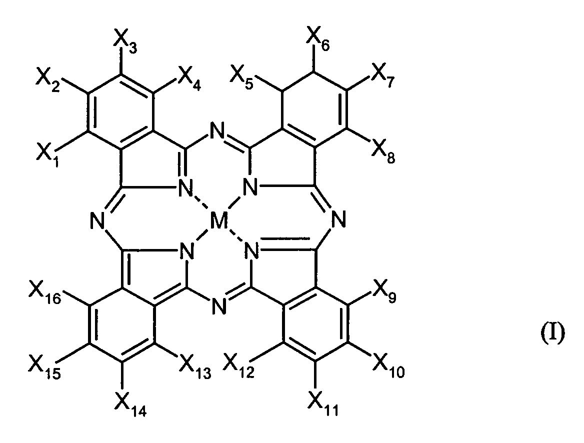 M = beliebiges Metallzentrum oder Wasserstoff, bevorzugt VO, Cu, Al, Zn, Ni, HH, SiR₂, AIR, Mg, Fe, GaR, MnR, SnR, Na₂, Li₂, TiO und besonders bevorzugt VO oder Cu. Dabei ist R=aliphatischer oder aromatischer Rest, auch Alkoxy bzw. Aroxy. X₁-X₁₆= H, Halogene, aliphatischer oder aromatischer Rest, auch Alkoxy bzw. Aroxy oder -S-Alkyl bzw. -S-Aryl oder -NHAlkyl bzw. NHAryl oder NAlkyl₂ bzw. NAryl₂ oder -NHCOAlkyl bzw. NHCOAryl. Bevorzugt sind sperrige Reste wie tert.butyl, Phenoxy oder Phenyl. Erfindungsgemäß können X₁-X₁₂ bevorzugt insbesondere auch Fluor und/oder Chlor als Substituenten umfassen.

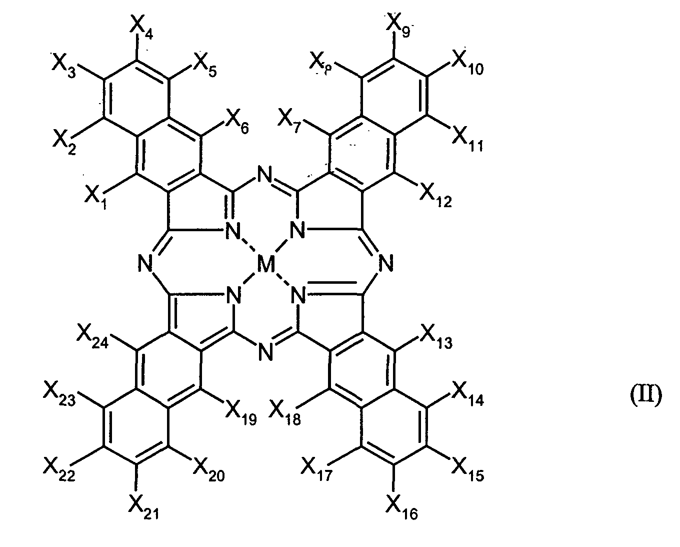

Als Naphthalocyanine sind besonders geeignet Verbindungen der Formel II mit M = beliebiges Metallzentrum oder Wasserstoff, bevorzugt VO, Cu, Al, Zn, Ni, HH, SiR₂, AlR, Mg, Fe, GaR, MnR, SnR, Na₂, Li₂, TiO und besonders bevorzugt VO oder Cu. Dabei ist R=aliphatischer oder aromatischer Rest, auch Alkoxy bzw. Aroxy. X₁-X₂₄= H, Halogene, aliphatischer oder aromatischer Rest, auch Alkoxy bzw. Aroxy oder -S-Alkyl bzw. -S-Aryl oder -NHAlkyl bzw. NHAryl oder NAlkyl₂ bzw. NAryl₂ oder -NHCOAlkyl bzw. NHCOAryl. Bevorzugt sind sperrige Reste wie tert.-butyl, Phenoxy oder Phenyl. Erfindungsgemäß können X₁-X₂₄ bevorzugt insbesondere auch Fluor und/oder Chlor als Substituenten umfassen.

Es sind auch Mischungen verschiedener NIR-Absorber geeignet.

Als **Komponente C)** können die Zusammensetzungen erfindungsgemäß einen faseroder teilchenförmigen Füll- oder Verstärkungsstoff oder eine Mischung aus zwei oder mehreren unterschiedlichen Füll- und/oder Verstärkungsstoffen enthalten. Als faser- oder teilchenförmige Füllstoffe und Verstärkungsstoffe für die erfindungsgemäßen Formmassen können Glasfasern, Glaskugeln, Glasgewebe, Glasmatten, Whisker, Aramidfasern, Kaliumtitanat-Fasem, Naturfasern, amorphe Kieselsäure, Magnesiumcarbonat, Bariumsulfat, Feldspat, Glimmer, Silikate, Quarz, Talkum, Kaolin; Wollastonit, u.a. zugesetzt werden, die auch oberflächenbehandelt sein können. Bevorzugte Verstärkungsstoffe sind handelsübliche Glasfasern und Glaskugeln, ganz besonders bevorzugt sind Glasfasern.

Die erfindungsgemäßen Glasfasern, die im allgemeinen einen Faserdurchmesser zwischen 7 und 18, bevorzugt zwischen 9 und 15 um haben, können als Endlosfasern oder als geschnittene oder gemahlene Glasfasern zugesetzt werden, wobei die Fasern mit einem geeigneten Schlichtesystem und einem Haftvermittler bzw. Haftvermittlersystem z.B. auf Silanbasis ausgerüstet sein können.

Die erfindungsgemäßen Glaskugeln besitzen im allgemeinen Kugeldurchmesser von 10 bis 150 µm, bevorzugt von 10 - 30 µm und können mit einem Haftvermittlersystem z.B. auf Silanbasis ausgerüstet sein.

Geeignet sind auch nadelförmige mineralische Füllstoffe. Unter nadelförmigen mineralischen Füllstoffen wird im Sinne der Erfindung ein mineralischer Füllstoff mit stark ausgeprägter nadelförmiger Struktur verstanden. Als Beispiel sei nadelförmiger Wollastonit genannt. Vorzugsweise weist das Mineral ein L/D-(Länge Durchmesser)-Verhältnis von 8:1 bis 35:1, bevorzugt von 8:1 bis 20:1 auf. Der mineralische Füllstoff kann gegebenenfalls oberflächenbehandelt sein.

Die Zugabe der Füllstoffe kann vor, während oder nach der Polymerisation der Monomere zum Thermoplasten der Komponente A) erfolgen. Erfolgt die Zugabe der erfindungsgemäßen Füllstoffe nach der Polymerisation, so erfolgt sie vorzugsweise durch Zugabe zur Polymerschmelze in einem Extruder. Erfolgt die Zugabe der erfindungsgemäßen Füllstoffe vor oder während der Polymerisation, so kann die Polymerisation Phasen umfassen, in denen in Gegenwart von 1 bis 50 Gewichtsprozent Wasser oder anderer Lösungsmittel gearbeitet wird.

Die Füllstoffe können bei der Zugabe schon als Partikel mit der letztendlich in der Formmasse auftretenden Partikelgröße vorliegen. Alternativ können die Füllstoffe in Form von Vorstufen zugegeben werden, aus denen die letztendlich in der Formmasse auftretenden Partikel erst im Laufe der Zugabe bzw. Einarbeitung entstehen.

**Als Komponente D)** können die erfindungsgemäßen Zusammensetzungen darüber hinaus Zusatzstoffe wie z.B. Flammschutzmittel, Stabilisatoren, Pigmente, Verarbeitungshilfsmittel wie z. B. Gleitmittel, Nukleierungsmittel, kautschukelastische Polymerisate enthalten (oft auch als Schlagzähmodifikator, Elastomer oder Kautschuk bezeichnet) wie z. B. Kautschuke oder Polyolefine u.ä enthalten.

Als Flammschutzmittel sind handelsübliche organische Verbindungen oder Halogenverbindungen mit Synergisten oder handelsübliche organische Stickstoffverbindungen oder organisch/anorganische Phosphorverbindungen oder roter Phosphor geeignet. Auch Flammschutzadditive wie Magnesiumhydroxid oder Ca-Mg-Carbonat-Hydrate (z.B. DE-A 4 236 122) können eingesetzt werden. Als halogenhaltige, insbesondere bromierte und chlorierte Verbindungen seien beispielhaft genannt: Ethylen-1,2-bistetrabromphthalimid, epoxidiertes Tetrabrombisphenol A-Harz, Tetrabrombisphenol-A-oligocarbonat, Tetrachlorbisphenol-A-oligocarbonat, Pentabrompolyacrylat, bromiertes Polystyrol. Als organische Phosphorverbindungen sind die Phosphorverbindungen gemäß WO-A 98/17720 geeignet, z.B. Triphenylphosphat (TPP) Resorcinol-bis-(diphenylphosphat) einschließlich Oligomere (RDP) sowie Bisphenol-A-bis-diphenylphosphat einschließlich Oligomere (BDP), Melaminphosphat, Melaminpyrophosphat, Melaminpolyphosphat und deren Mischungen. Als Stickstoffverbindungen kommen insbesondere Melamin und Melamincyanurat in Frage. Als Synergisten sind z.B. Antimonverbindungen, insbesondere Antimontrioxid und Antimonpentoxid, Zinkverbindungen, Zinnverbindungen wie z.B. Zinnstannat und Borate oder Eisenoxide geeignet. Kohlenstoffbildner und Tetrafluorethylenpolymerisate können zugesetzt werden.

Die erfindungsgemäßen Formmassen können übliche Additive, wie Mittel gegen Wärmezersetzung, Mittel gegen Wärmevernetzung, Mittel gegen Beschädigung durch ultrviolettes Licht, Weichmacher, Gleit- und Entformungsmittel, Nukleierungsmittel, Antistatika, ggf. weitere Stabilisatoren enthalten.

Die erfindungsgemäßen Formmassen werden hergestellt, indem man die jeweiligen Bestandteile in bekannter Weise vermischt und bei Temperaturen zwischen 200°C bis 380°C, meist zwischen 250°C und 350°C in üblichen Aggregaten wie z.B. Innenknetern, Extrudern, Doppelwellenschnecken schmelzcompoundiert oder schmelzextrudiert. Bei dem Schmelzcompoundier- oder Schmelzextrudierschritt lassen sich weitere Zusätze wie z.B. Verstärkungsstoffe, Stabilistoren, Gleit- und Entformungsmittel, Nukleierungsmittel, und andere Additive zusetzen.

Als Beispiele für Oxidationsverzögerer und Wärmestabilisatoren sind sterisch gehinderte Phenole und/oder Phosphite, Hydrochinone, aromatische sekundäre Amine wie Diphenylamine, verschiedene substituierte Vertreter dieser Gruppen und deren Mischungen in Konzentrationen bis zu 1 Gew.-%, bezogen auf das Gewicht der thermoplastischen Formmassen genannt.

Als Beispiele für UV-Stabilisatoren, die im allgemeinen in Mengen bis zu 2 Gew.-%, bezogen auf die Formmasse, verwendet werden, seien substituierte Resorcine, Salicylate, Benzotriazole und Benzophenone genannt.

Es können anorganische Pigmente, wie Titandioxid, Ultramarinblau, Eisenoxid, weiterhin organische Pigmente, wie Phthalocyanine, Chinacridone, Perylene sowie Farbstoffe, wie Nigrosin und Anthrachinone als Farbmittel sowie andere Farbmittel zugesetzt werden, wobei bevorzugt solche Farbmittel eingesetzt werden sollten, die die mechanischen Eigenschaften der Formmasse nicht zu stark beeinträchtigen.

Als Keimbildungsmittel für teilkristalline Thermoplaste wie z.B. Polyamid 6 oder PBT können z.B. Natriumphenylphosphinat, Aluminiumoxid, Siliziumdioxid, sowie bevorzugt Talkum eingesetzt werden.

Gleit- und Entformungsmittel, welche üblicherweise in Mengen bis zu 1 Gew.-% eingesetzt werden, sind bevorzugt Esterwachse, Penterithrytstearat (PETS), langkettige Fettsäuren (z.B. Stearinsäure oder Behensäure), deren Salze (z.B. Ca- oder Zn-Stearat) sowie Amidderivate (z.B. Ethylen-bis-stearylamid) oder Montanwachse sowie niedermolekulare Polyethylen- bzw. Polypropylenwachse.

Als Beispiele für Weichmacher seien Phthalsäuredioctylester, Phthalsäuredibenzylester, Phthalsäurebutylbenzylester, Kohlenwasserstofföle, N-(n-Butyl)benzolsulfonamid genannt.

Besonders bevorzugt ist der zusätzliche Einsatz von kautschukelastischen Polymerisaten (oft auch als Schlagzähmodifikator, Elastomer oder Kautschuk bezeichnet).

Ganz allgemein handelt es sich dabei um Copolymerisate, die bevorzugt aus mindestens zwei der folgenden Monomeren aufgebaut sind: Ethylen, Propylen, Butadien, Isobuten, Isopren, Chloropren, Vinylacetat, Styrol, Acrylnitril und Acryl- bzw. Methacrylsäureester mit 1 bis 18 C-Atomen in der Alkoholkomponente.

Derartige Polymere werden z.B. in Houben-Weyl, Methoden der organischen Chemie, Bd. 14/1 (Georg-Thieme-Verlag), Stuttgart, 1961), Seiten 392 bis 406 und in der Monographie von C.B. Bucknall, "Toughened Plastics" (Applied Science Publishers, London, 1977) beschrieben.

Selbstverständlich können auch Mischungen von Kautschuktypen eingesetzt werden.

Als erfmdungsgemäße IR-absorbierende Verbindungen eignen sich sowohl organische als auch anorganische Pigmente und/oder Farbstoffe. Ruß kann gegebenenfalls in sehr geringen Mengen (< 0,1 Gew.-%, bevorzugt < 0,01 Gew.-%, bezogen auf die Gesamtzusammensetzung) Bestandteil der Pigmentmischung sein. Die Pigmente/Farbstoffe und/oder Ruße können gegebenenfalls auch als Batch eingesetzt werden.

Beispiele für anorganische Pigmente sind Antimontrioxid, Antimonpentoxid, basisches Bleicarbonat, basisches Bleisulfat oder Bleisilikat, Lithopone, Titandioxid (Anatas, Rutil), Zinkoxid, Zinksulfid, Metalloxide wie Berlinerblau, Bleichromat, Bleisulfochromate, Chrom-antimon-titanat, Chromoxide, Eisenoxide, Kobaltblau, Kobaltchromblau, Kobaltnickelgrau, Manganblau, Manganviolett, Molybdatorange, Molybdatrot, Nickel-antimon-titanat, Ultramarinblau, sowie Metallsulfide wie Antimontrisulfid, Cadmiumsulfid, Cadmiumsulfoselenide, Zirkonsilikate, Zirkonvanadiumblau, Zirkonpraseodymgelb.

Beispiele für organische Pigmente sind Antrachinon-, Azo-, Azomethin-, Benzanthron-, Chinacridon-, Chinophthalon-, Dioxazin-, Flavanthron-, Indanthron-, Isoindolin-, Isoindolinon-, Methin-, Perinon-, Perylen-, Phthalocyanin-, Pyranthron-, Pyrrolopyrrol-, Thioindigopigmente sowie Metallkomplexe von z.B. Azo-, Azomethin-, Methinfarbstoffen oder Metallsalzen von Azoverbindungen.

Als polymerlösliche Farbstoffe eignen sich beispielsweise Dispersionsfarbstoffe, wie solche der Anthrachinonreihe, beispielsweise Alkylamino-, Amino-, Arylamino-, Cyclohexylamino-, Hydroxy-, Hydroxyamino- oder Phenylmercaptoanthrachinone, sowie Metallkomplexe von Azofarbstoffen, insbesondere 1:2-Chrom- oder Kobaltkomplexe von Monoazofarbstoffen, sowie Fluoreszenzfarbstoffe, zum Beispiel solche aus der Benzthiazol-, Cumarin-, Oxarin-, - oder Thiazinreihe.

Die polymerlöslichen Farbstoffe können auch in Kombinationen mit Füllern und/ oder Pigmenten, insbesondere mit anorganischen Pigmenten wie Titandioxid eingesetzt werden.

Erfindungsgemäß können Pigmente und/oder polymerlösliche Farbstoffe verwendet werden. Die verwendeten Farbstoffe oder Pigmente sollten selbstverständlich mit den erfindungsgemäß verwendeten thermoplastischen Polymeren verträglich sein und deren mechanische oder sonstige Eigenschaften nicht unzulässig beeinträchtigen.

Geeignete Pigmentzusätze sind beispielsweise Fettsäuren mit mindestens 12 C-Atomen, wie Behensäure oder Stearinsäure, deren Amide, Salze oder Ester, wie Aluminiumstearat, Magnesiumstearat, Zinkstearat, oder Magnesiumbehenat, sowie quartäre Ammoniumverbindungen, wie Tri-(C₁-C₄)-alkylbenzylammoniumsalze, Wachse, wie Polyethylenwachs, Harzsäuren, wie Abietinsäure, Kolophoniumseife, hydriertes oder dimeriesiertes Kolophonium, C₁₂-C₁₈-Paraffindisulfonsäuren oder Alkylphenole.

Erfindungsgemäß bevorzugt sind Farbstoffe vom Pyrazolon-, Perinon- und Anthrachinontyp, weiterhin vom Methin-, Azo- und Cumarin-Typ.

Ebenfalls bevorzugt sind die metallhaltigen Pigmente, wie die anorganischen Pigmente und die Metallkomplexe von Azo-, Azomethin- oder Methinfarbstoffen, Azomethin-, Chinacridon-, Dioxazin-, Isoindolin-, Isoindolinon-, Perylen-, Phthalocyanin-, Pyrrolopyrrol- und Thioindigo-Farbmittel und Wismut-Vanadat.

Gegenstand der Erfindung sind auch:
- Formteile herstellbar aus erfindungsgemäßen thermoplastischen Formmassen.
- Verwendung von erfindungsgemäßen Formmassen zur Herstellung von Formteilen, die durch Laserdurchstrahlschweißen mit anderen Formteilen verbunden werden.
- Verbindungen von Formteilen, die durch Laserdurchstrahlschweißen gefügt werden und bei denen mindestens ein Teil aus der erfindungsgemäßen Formmasse besteht.

### Beispiele

PA 6 mittlerer Viskosität (Durethan B30F, Handelsprodukt der Bayer AG) wurde mit 30 % Glasfasern (CS 7928; Händelsprodukt der Bayer AG) und mit IR-absorbierenden Verbindungen gegebenenfalls in Kombination mit weiteren IR-absorbierenden Verbindungen physikalisch vermischt und durch Compoundierung auf einem Zweiwellenextruder (ZSK 32 der Fa. Werner und Pfleiderer) bei Massetemperaturen von 260 - 300°C homogen eingefärbt, gegebenenfalls unter Zugabe von Glasfasern.

PBT niedriger Viskosität (Pocan B 1300, Handelsprodukt der Bayer AG) wurde mit IR-absorbierenden Verbindungen gegebenenfalls in Kombination mit weiteren Farbmitteln physikalisch vermischt und durch Compoundierung auf einem Zweiwellenextruder (ZSK 32 der Fa. Werner und Pfleiderer) bei Massetemperaturen von 235 bis 270°C homogen eingefärbt.

Die Schmelze wurde anschließend durch ein Wasserbad abgesponnen und granuliert.

Als lasertransparenter Fügepartner kam bei den Polyamidversuchen unverstärktes PA6 (Durethan B31SK 9000/0; Handelsprodukt der Bayer AG) zur Anwendung. Es wurden ASTM-Stäbe der Dicke 1,6 mm verwendet.

Im Falle von PBT wurde unverstärktes PBT (Pocan 1305; Handelsprodukt der Bayer AG) verwendet. Hier ASTM-Stäbe der Dicke 0,8 bzw. 1,0 mm verwendet.

Das erhaltene Granulat wurde auf einer Spritzgießmaschine des Typs Arburg 320-210-500 unter formmasseüblichen Bedingungen (Massetemperaturen von 250-290°C, Werkzeugtemperaturen von 70 - 90°C) für Lasertransmissionsmessungen und Schweißversuche zu ASTM-Stäben unterschiedlicher Dicke (Dicke 0,8; 1,0; 1,6 mm; 3,2 mm; Länge: 127 mm; Breite: 12,7 mm) verarbeitet.

Beispiele für Zusammensetzung und Eigenschaften von erfindungsgemäßen Formmassen bzw. von Vergleichsmaterial sind in Tabellen 1 bis 4 angegeben.

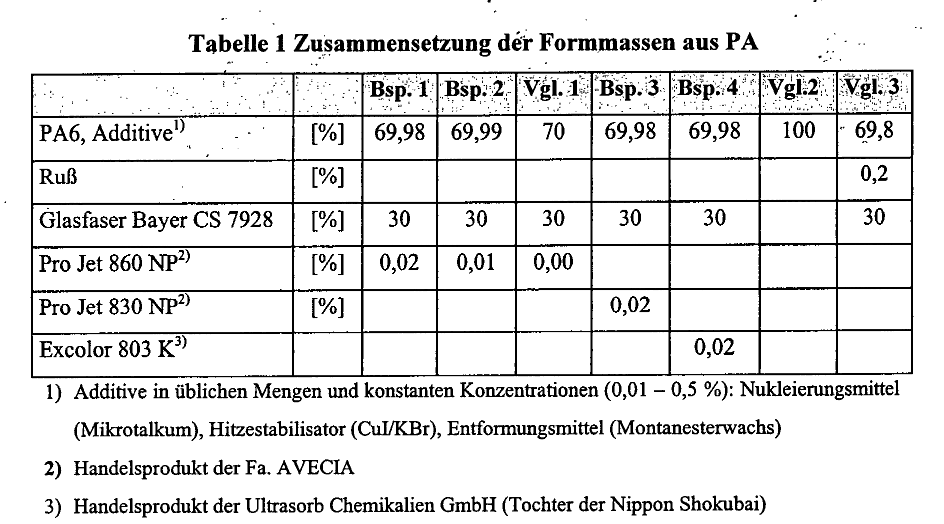

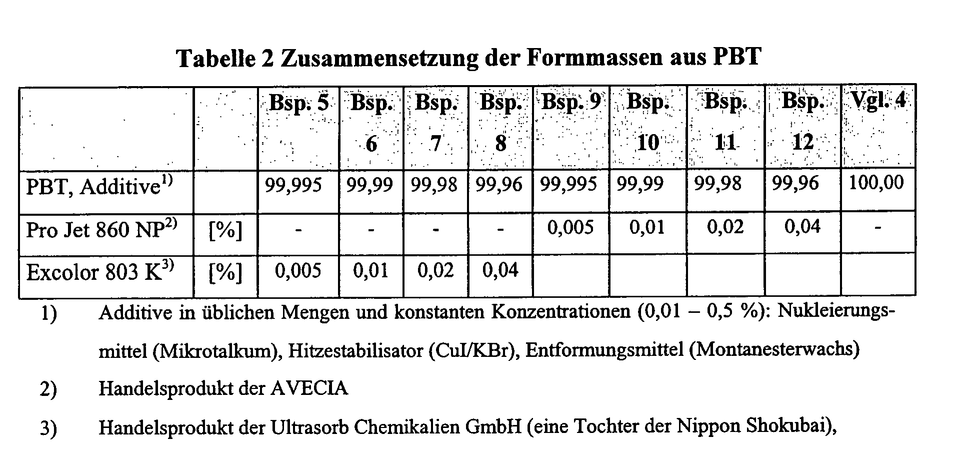

### Beschreibung Durchführung und Ergebnisse der Lasertransmissionsmessungen

Die ASTM-Prüfstäbe aus dem IR-Laser-absorbierenden und dem IR-Laser-transparenten Material wurden mit einer Transmissionsmessanordnung, bestehend aus einem Spektralphotometer und einer Photometerkugel, vermessen, die sowohl direkt transmittiertes Licht als auch gestreutes Licht erfasst. Für die IR-Laser-absorbierenden Proben werden bei Probekörperdicken von 3,2 mm zumindest in Teilbereichen des NIR-Spektralbereiches zwischen 800 und 1200 nm Messwerte von <15% erhalten, während das IR-Laser-transparente Material ein Transmissionsniveau von typischerweise 20-70% aufweist.

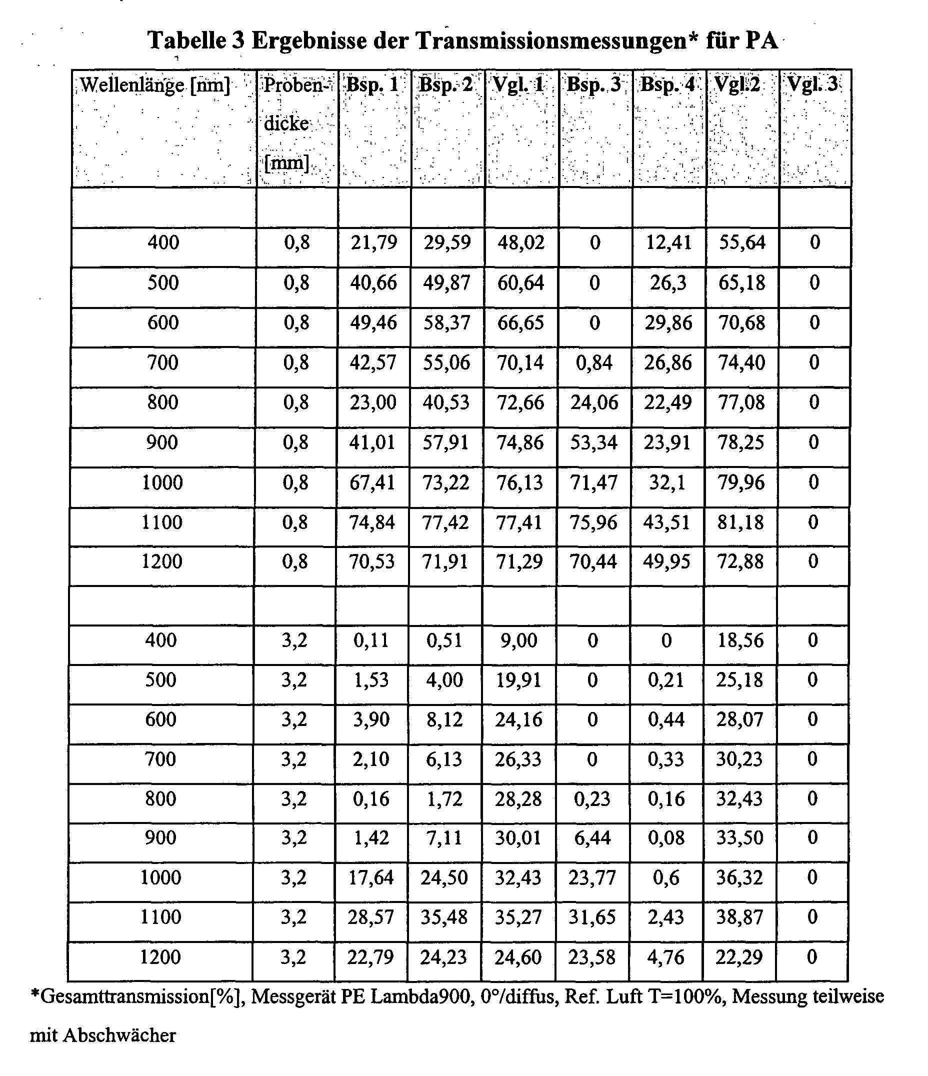

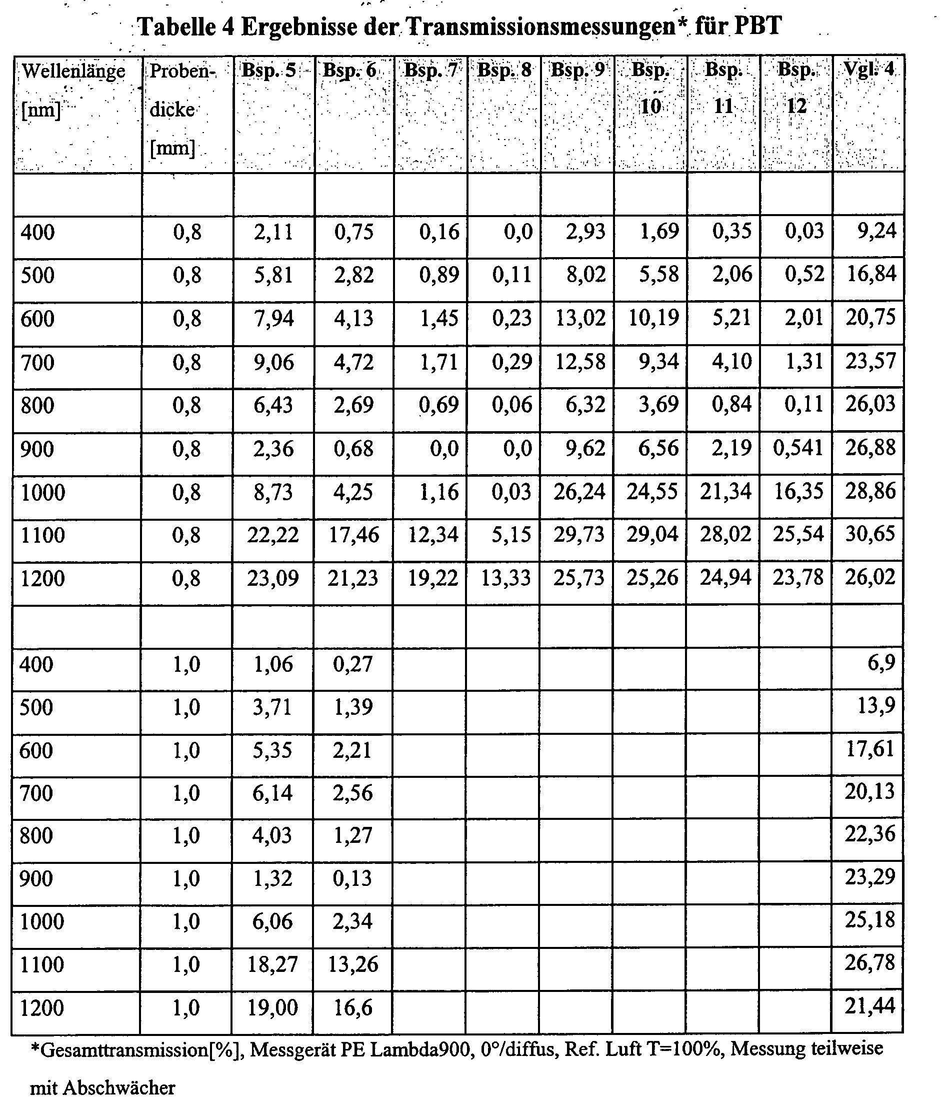

Da es sich bei allen Proben um sehr stark streuendes Material handelt, wurde die Gesamttransmission als Summe aus direkter und diffuser Transmission ausgewertet.

Die Proben entsprechend den Vergleichsbeispielen weisen eine deutlich höhere Transmission auf, als die erfindungsgemäß eingefärbten Proben Bsp.1-12, die insbesondere bei 800-900. nm und/oder 1000-1100 nm (Wellenlängenbereich der gebräuchlichen Dioden bzw. Nd:YAG-Laser) eine so geringe Transmission zeigen, dass sie als absorbierender Schweißpartner ab einer Dicke von 0,8 mm (PBT) bzw. ab einer Dicke zwischen 0,8 und 3,2 mm (PA) geeignet sind. Bei den Messungen wurde die Gesamttransmission (bestehend vorwiegend aus diffusen Strahlungsanteilen) betrachtet.

### Durchführung und Ergebnisse der Laserschweißversuche

Zur Überprüfung der Eignung der Formmassen für Laserdurchstrahlschweißen wurden Schweißversuche mit einem Nd:YAG Laser (1064nm Wellenlänge) durchgeführt. Die laserstrahltransparenten ASTM-Stäbe wurden in eine Vorrichtung gespannt und mit Überlappung wie in Abbildung 1 dargestellt miteinander gefügt.

Im Falle von PA wurden die lasertransparenten Proben mit 0,8 mm Dicke mit ca. 36 Watt Laserleistung und einer Vorschubgeschwindigkeit von 10 mm/s einmal über die komplette Breite der ASTM-Stäbe abgefahren und dabei mit einer Schweißnahtbreite von etwa 1,5 mm geschweißt. Bei den 3,2 mm dicken PA-Proben wurde mit einer Laserleistung von ca. 45 Watt gearbeitet.

Im Falle der PBT-Beispiele wurden die lasertransparenten Proben der Dicke 0,8 und 1,0 mit ca. 36 bis 60 Watt Laserleistung und einer Vorschubgeschwindigkeit von 4 bis 6 mm/s einmal über die komplette Breite der ASTM-Stäbe abgefahren und dabei mit einer Schweißnahtbreite von etwa 1,5 mm geschweißt. Detaillierte Angaben der Versuchparameter enthält Tabelle 6.

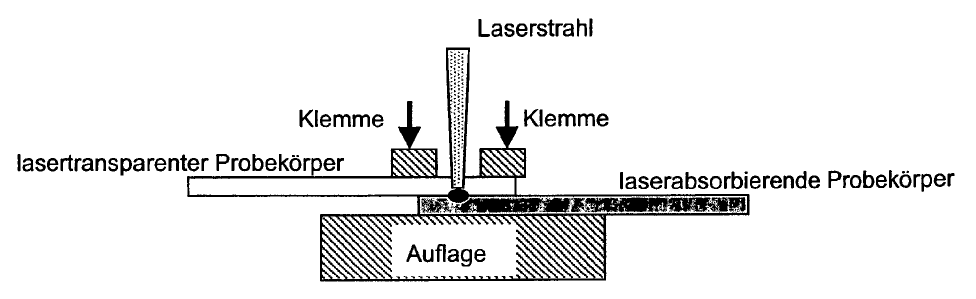

Die als Überlappstoß geschweißten Proben wurden wie in Abbildung 2 dargestellt in einem Zugscherversuch bis zum Bruch belastet.

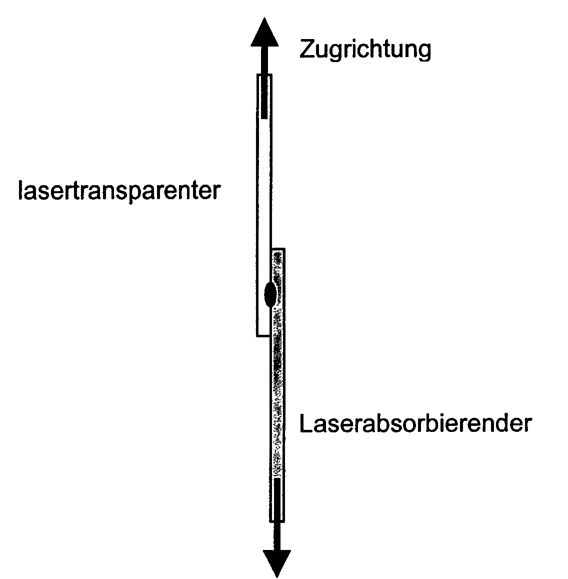

Die dabei gemessenen Reißkraftwerte liegen für alle Beispiele auf einem akzeptablen bis sehr guten Niveau.

**Tabelle 5**

| **Ergebnisse der Zugversuche an laserdurchstrahlgeschweißten ASTM Probekörpern aus PA; Reißkraft in N** | | | |
|---|---|---|---|
| | | Dicke der ASTM-Probekörper aus Material 2* | |
| Materialpaarung | | 0,8 mm | 3,2 mm |
| Material 1* (Dicke) | Material 2 | | |
| Vgl. 2 | Bsp.1 | 594 | 707 |
| Vgl. 2 | Bsp. 2 | 777 | 196 |
| Vgl. 2 | Vgl. 1 | Nicht verschweißbar | Nicht verschweißbar |
| Vgl. 2 | Bsp.4 | 426 | 847 |

| | | | |
|---|---|---|---|
| * Als Material 1 wird hier das Formteil/Material verstanden, das zuerst mit dem Laserstrahl in Kontakt kommt, d.h. lasertransparent ist. | | | |

**Tabelle 6**

| **Ergebnisse der Zugversuche an laserdurchstrahlgeschweißten ASTM Probekörpern aus PBT** | | | | | |
|---|---|---|---|---|---|
| | | Schweißparameter: Laserleistung [W] / Vorschubgeschw. [mm/s] | | Reißkraft [N] | |
| Materialpaarung | | Dicke Material 1 | | Dicke Material 1 | |
| Mat.1* | Mat.2 | 0,8mm | 1,0mm | 0,8mm | 1,0mm |
| Vgl. 4 | Bsp. 5 Dicke 1,0 mm | - | 60/6 | - | 265 |
| Vgl. 4 | Bsp. 6 Dicke 1,0 mm | - | 60/6 | - | 299 |
| Vgl. 4 | Bsp. 7 Dicke 1,0 mm | - | 60/5 | - | 212 |
| Vgl. 4 | Bsp. 8 Dicke 1,0 mm | - | | - | 301 |
| Vgl. 4 | Bsp. 9 Dicke 1,6 mm | 51/4 | 60/6 | 141 | 142 |
| Vgl. 4 | Bsp. 10 Dicke 1,6 mm | 51/4 | 60/4 | 164 | 182 |
| Vgl. 4 | Bsp. 11 Dicke 1,6 mm | 51/4 | 60/4 | 165 | 189 |
| Vgl. 4 | Bsp. 12 Dicke 1,6 mm | 51/4 | 60/4 | 227 | 204 |
| Vgl. 4 | Vgl. 5 | | | | |
| | Dicke 1,0 mm | 36/5 | 36/5 | 428 | 382 |
| | Dicke 1,6 mm | 36/5 | 36/5 | 512 | 375 |

| | | | | | |
|---|---|---|---|---|---|
| * Als Material 1 wird hier das Formteil/Material verstanden, das zuerst mit dem Laserstrahl in Kontakt kommt, d.h. lasertransparent ist | | | | | |

## Patentansprüche

1. Zusammensetzungen enthaltend;
A) 35 bis 99,999 Gew.-% eines lasertransparenten Thermoplasten
B) 0,001 bis 0,1 Gew.-% eines oder mehrerer IR-absorbierenden Verbindungen, ausgewählt aus der Gruppe der Phthalocyanine, der Naphthalocyanine, der Perylene, der Quaterylene, der Metallkomplexe, der Azofarbstoffe, der Anthraquinone, der Quadratsäurederivate, der Immoniumfarbstoffe sowie der Polymethine.
C) 0 bis 70 Gew.-% mineralische Füll- und/oder Verstärkungsstoffe
D) 0 bis 30 % übliche Additive wie Verarbeitungshilfsmittel, Nukleierungsmittel, Stabilisatoren, Flammschutzmittel, Elastomermodifikatoren,
wobei die Gesamtzusammensetzung einen Rußanteil von weniger 0,1 Gew.-% aufweist.

2. Zusammensetzungen nach Anspruch 1, in denen die IR-absorbierenden Verbindungen aus der Gruppe der Phthalocyanine und/oder der Naphthalocyanine ausgewählt sind.

3. Zusammensetzungen gemäß einem der mehreren der vorangegangenen Ansprüche, **dadurch gekennzeichnet, dass** als Thermoplaste mindestens ein Polyamid und/oder Polyester eingesetzt wird.

4. Zusammensetzungen gemäß einem der mehreren der vorangegangenen Ansprüche, in denen mindestens 1 Gew.-% eines Verstärkungs- und/oder Füllstoffs als Komponente C) enthalten ist.

5. Zusammensetzungen gemäß einem der mehreren der vorangegangenen Ansprüche die als Komponente C) Glasfasern enthalten.

6. Zusammensetzungen gemäß einem der mehreren der vorangegangenen Ansprüche, **dadurch gekennzeichnet, dass** als Thermoplaste mindestens ein Polycarbonat und/oder Polyester eingesetzt wird

7. Formmassen, herstellbar aus Zusammensetzungen nach einem der vorangegangenen Ansprüche.

8. Formteile, herstellbar aus thermoplastischen Formmassen nach Anspruch 7.

9. Verwendung von Formmassen gemäß einem der mehreren der vorangegangenen Ansprüche zur Herstellung von Formteilen, die durch Laserdurchstrahlschweißen mit anderen Formteilen verbunden werden.

10. Verbindungen von Formteilen die durch Laserdurchstrahlschweißen gefügt wurden und bei denen mindestens ein Formteil aus einer thermoplastischen Formmasse nach einem oder mehreren der vorangegangenen Ansprüche besteht.
